# EUROPEAN PATENT SPECIFICATION

(11) **EP 4 279 891 B1**
(45) Date of publication and mention of the grant of the patent: **16.09.2026**
(21) Application number: 22739381.6
(22) Date of filing: 11.01.2022
(51) Int. Cl.: G01L 3/10, G01L 3/14

(54) **DRIVE PLATE-TYPE TORQUE TRANSDUCER**
DREHMOMENTWANDLER VOM ANTRIEBSPLATTENTYP
TRANSDUCTEUR DE COUPLE DU TYPE À PLAQUE D'ENTRAÎNEMENT

(30) Priority: 12.01.2021 JP 2021002890
(43) Date of publication of application: 22.11.2023
(73) Proprietor: Minebea Mitsumi Inc., Kitasaku-gun, Nagano 3890293 (JP)
(72) Inventor: KOBAYASHI, Yukihiro, Kitasaku-gun, Nagano 389-0293 (JP)
(74) Representative: Dennemeyer & Associates S.A.
(86) International application number: PCT/JP2022/000554
(87) International publication number: WO 2022/153974

(56) References cited:
- EP-A1- 2 322 905
- WO-A1-2019/239938
- CN-A- 109 238 531
- DE-A1- 102010 017 851
- JP-A- 2001 221 696
- JP-A- 2003 246 201
- JP-A- 2019 522 186
- JP-A- 2019 537 032
- JP-A- 2020 012 660
- US-A1- 2010 000 327
- US-B1- 6 324 919

## Description

### Technical Field

The present invention relates to a drive plate type torque converter for measuring a torque applied to a drive plate.

### Background Art

Conventionally, a drive plate (flex plate) is used to transmit the driving force of an engine to a torque converter of a transmission. There is known a technique of detecting the torque of an engine while a vehicle is running by using a drive plate type torque converter instead of the drive plate. For example, Patent Document 1 discloses a torque measuring device such that a strain gauge disposed at a strain portion of a plate and a temperature gauge for compensating for a change in a resistance value of the strain gauge due to temperature are disposed at the same circumferential line of the plate. Patent Document 2 describes a dicyclic six-dimension force sensor with improved resolution and intrinsic frequency, comprising outer and inner beams connected by radial girders, circumferential supports between adjacent beams, inner beam through-holes, radial girder vertical through-holes, and radial girder cross through-holes, with strain gauges placed on both sides of these holes. Patent Document 3 discloses a wheel load transducer with T-shaped spokes containing wells for mounting strain gauges to measure forces and moments on a wheel.

### Citation List

### Patent Literature

Patent Document 1: JP 2019-184466 A
Patent Document 2: CN 109 238 531 A
Patent Document 3: US 6 324 919 B1

### Summary of Invention

### Technical Problem

In the related art, there is a problem in that a strain portion of a plate is not sufficiently deformed and detection sensitivity of a strain gauge is low. Therefore, an object of the present invention is to provide a drive plate type torque converter with improved detection sensitivity of a strain gauge. Another object of the present invention is to detect a torque output with high accuracy.

### Solution to Problem

A drive plate type torque converter of the present invention is defined in claim 1.

In the present invention, two through holes are provided at both sides of each of the spokes in a radial direction with the strain gauges in between.

In the present invention, it is preferable that walls be provided at both sides of each of the spokes in a circumferential direction, and a thickness of a central portion of each of the spokes having the strain gauges disposed be less than a thickness of the walls.

In the present invention, it is preferable that two screw holes be provided at positions symmetrical in a circumferential direction with respect to the spokes.

In the present invention, it is preferable that a material of a resistor of the strain gauges be nickel-chromium.

In the present invention, it is preferable that the strain gauges be disposed at a front side and a back side of each of the plurality of spokes.

### Brief Description of Drawings

FIG. 1 is a block diagram illustrating a configuration of a drive plate type torque converter according to the present invention.
FIG. 2 is a plan view of a plate of the drive plate type torque converter according to the first embodiment of the present invention, outside the scope of the claims.
FIG. 3(a) is a plan view of a plate of a drive plate type torque converter according to a second embodiment of the present invention, and FIG. 3(b) is an enlarged perspective view of a spoke.
FIG. 4 is a view for explaining the study on a centrifugal force of the drive plate type torque converter of the present invention.
FIG. 5 is a plan view of a plate of a drive plate type torque converter according to a third embodiment of the present invention.
FIG. 6 is a view illustrating a result of a rotation test on a plate with a weight being added.
FIG. 7 is a view for explaining a study on a temperature of the drive plate type torque converter of the present invention.
FIG. 8 is a view for explaining a study on a bending load of the drive plate type torque converter of the present invention.
FIG. 9 is a view for explaining a study on a thrust load of the drive plate type torque converter of the present invention.

### Description of Embodiments

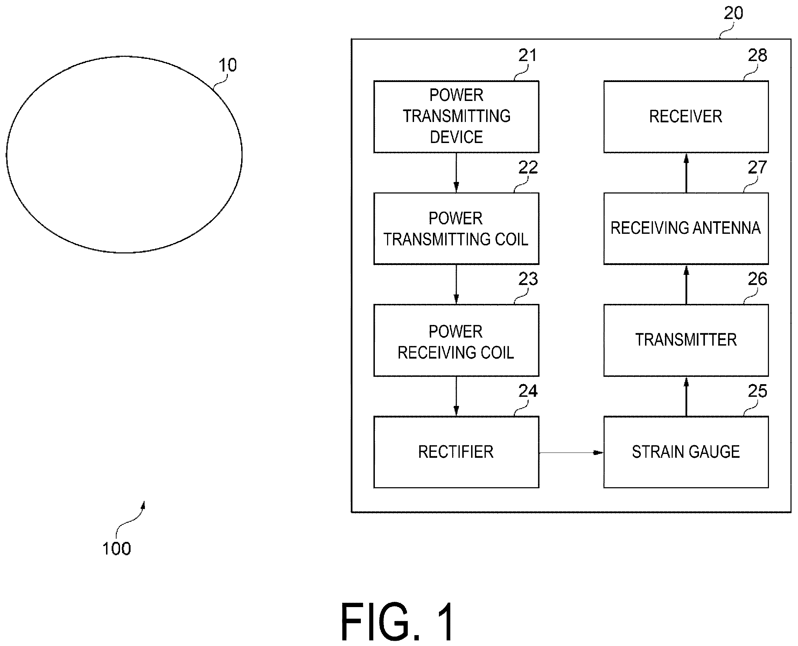

FIG. 1 is a block diagram illustrating a configuration of a drive plate type torque converter according to the present invention.

A drive plate type torque converter 100 has a plate 10 and a torque measuring device 20 for measuring torque applied to the plate 10.

The plate 10 replaces an existing drive plate disposed between an engine and a transmission.

The torque measuring device 20 includes a power transmitting device 21, a power transmitting coil 22, a power receiving coil 23, a rectifier 24, a strain gauge 25, a transmitter 26, a receiving antenna 27, and a receiver 28. The strain gauge 25 is disposed at a spoke of the plate 10 and constitutes a bridge circuit. The power receiving coil 23, the rectifier 24, and the transmitter 26 are disposed at arbitrary positions on the plate 10. The power transmitting device 21, the power transmitting coil 22, the receiving antenna 27, and the receiver 28 are disposed in the vicinity of the plate 10 (in a transmission/reception range of radio waves).

Power is inductively supplied from the power transmitting device 21 to the strain gauge 25, the torque applied to the plate 10 is measured by the strain gauge 25, and the measured torque is wirelessly transferred. Since the configuration and operation of the torque measuring device 20 are known, the detailed description will be omitted.

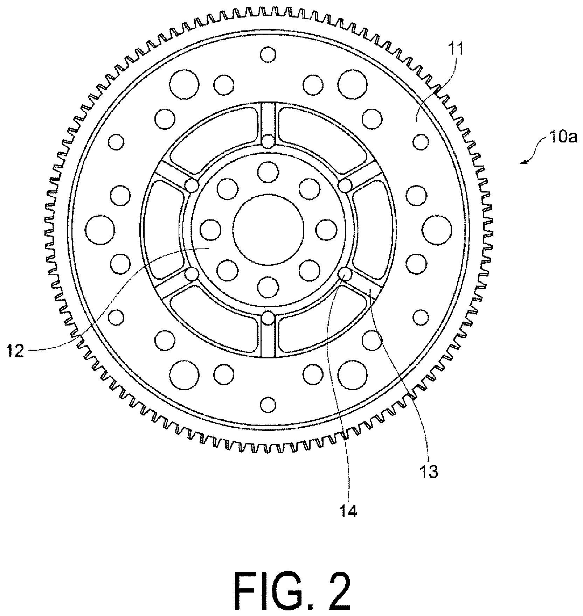

FIG. 2 is a plan view of a plate of the drive plate type torque converter according to the first embodiment of the present invention, outside the scope of the claims.

A plate 10a includes an outer ring 11, an inner ring 12, and a plurality of spokes 13 connecting the outer ring 11 and the inner ring 12. In the illustrated example, six spokes 13 are provided, but the number of spokes 13 may be any number as long as it is three or more.

Each spoke 13 is provided with at least one through hole 14.

Since the strength of the spoke 13 is reduced by the through hole 14, the strain gauge on the spoke 13 is easily deformed in an oblique direction, and the detection sensitivity of the strain gauge is improved.

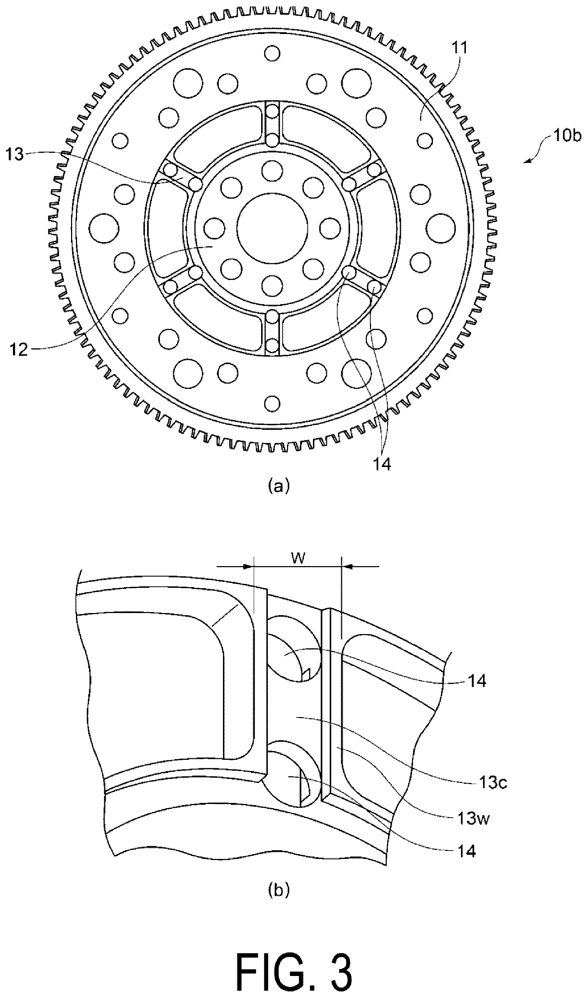

FIG. 3(a) is a plan view of a plate of a drive plate type torque converter according to a second embodiment of the present invention, and FIG. 3(b) is an enlarged perspective view of a spoke.

A plate 10b of the second embodiment is identical to the plate 10a of the first embodiment, except that each spoke 13 is provided with two through holes 14.

The two through holes 14 are provided at both sides of the spoke 13 in the radial direction with a strain gauge (not illustrated) in between. The centers of the two through holes 14 are located on the central axis of the spoke 13. Further, walls 13w are provided at both sides of the spoke 13 in the circumferential direction, and a thickness of a central portion 13c of the spoke 13 having the strain gauge disposed is less than a thickness of the walls 13w. Further, the width W of the spoke 13 is constant in the radial direction, and the spoke 13 has an I shape.

Since the two through holes 14 are provided, the central portion 13c of the spoke 13 has an X shape, and the strain gauge is more likely to be deformed in an oblique direction, enabling efficient detection of torque output. In addition, since the spoke 13 is easily deformed in the torsional direction due to the thin central portion 13c, the detection sensitivity of the strain gauge is improved. However, when the through hole 14 is simply provided and the central portion 13c is thinned, the strength in the thrust direction and the bending direction (lateral direction) becomes insufficient. Therefore, by increasing the thickness of the wall 13w of the spoke 13, the strength against the thrust direction and the bending direction can be sufficiently secured. Since the strength of the wall 13w is determined by the size of the wall 13w, the thickness and/or width of the wall 13w may be adjusted.

The through hole 14 in the illustrated example is an example, and various modifications can be made.

For example, the diameter of the through hole 14 may be equal to the width of the central portion 13c of the spoke 13, but may be smaller than the width of the central portion 13c. In addition, the through hole 14 may have an elliptical shape instead of a circular shape.

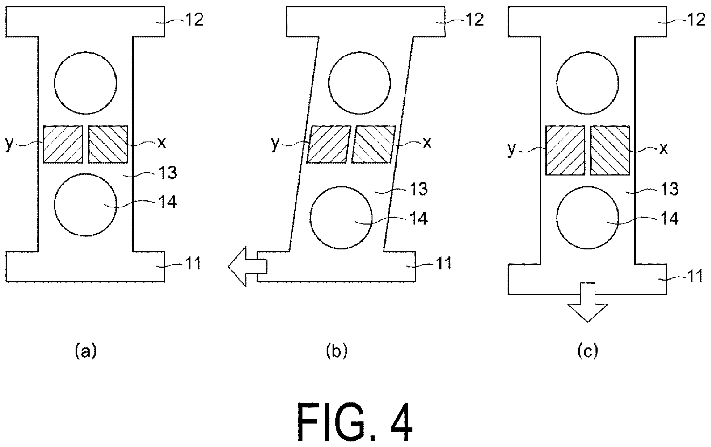

The centrifugal force of the drive plate type torque converter according to the present invention will be described with reference to FIG. 4.

FIG. 4(a) illustrates the spoke and strain gauge in a state without a load, FIG. 4(b) illustrates the spoke and strain gauge in a state where torque is applied, and FIG. 4(c) illustrates the spoke and strain gauge in a state where a centrifugal force is applied.

Two strain gauges x and y are disposed at the spoke 13, a resistor of the strain gauge x is inclined at -45° with respect to the radial direction, and a resistor of the strain gauge y is inclined at +45° with respect to the radial direction.

As illustrated in FIG. 4(a), when there is no load, the torque output is zero.

As illustrated in FIG. 4(b), in a state where torque is applied in the direction of the arrow, the resistance value of the strain gauge x decreases because the resistor contracts, the resistance value of the strain gauge y increases because the resistor expands, and the difference between the resistance values is output as torque.

As illustrated in FIG. 4(c), in a state where a centrifugal force is applied in the direction of the arrow, the strain gauges x and y extend in the same manner, and thus the torque output is zero. In this manner, by forming the spoke 13 in a symmetrical shape (I shape) with respect to the strain gauges x and y, the torque output can be made zero even when the plate is deformed by the centrifugal force.

However, since in actuality there is an error in the processing of the plate, the spoke 13 is obliquely deformed by the centrifugal force, and there may be output as torque. A configuration for improving this will be described below.

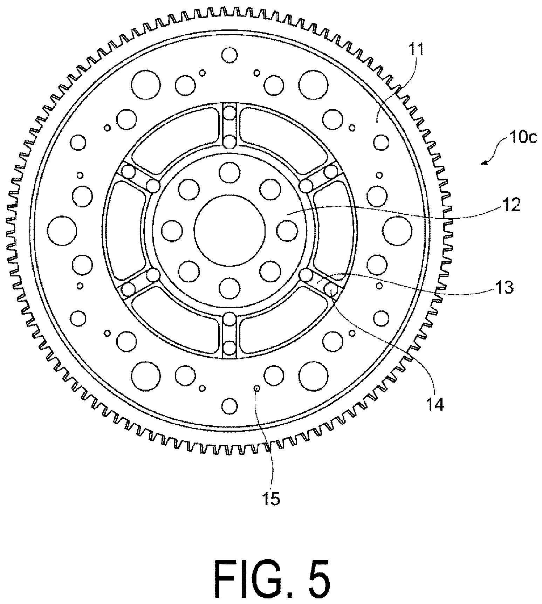

FIG. 5 is a plan view of a plate of a drive plate type torque converter according to a third embodiment of the present invention.

A plate 10c of the third embodiment is identical to the plate 10b of the second embodiment except that a screw hole 15 is provided.

The screw hole 15 is provided at positions symmetrical in the circumferential direction at the outer ring 11 with the spoke 13 in between. By adding a weight (not illustrated) formed by a bolt and a nut to any one or more of these twelve screw holes 15, the torque output can be made zero even when the spoke 13 is obliquely deformed by the centrifugal force.

In this manner, the error due to the centrifugal force is canceled by the weight, and the torque output can be detected with high accuracy.

It is sufficient that two screw holes 15 are provided at positions symmetrical in the circumferential direction with respect to one spoke 13, and the positions of the screw holes 15 are not limited to those in the illustrated example. For example, the screw holes 15 may be provided in the inner ring 12.

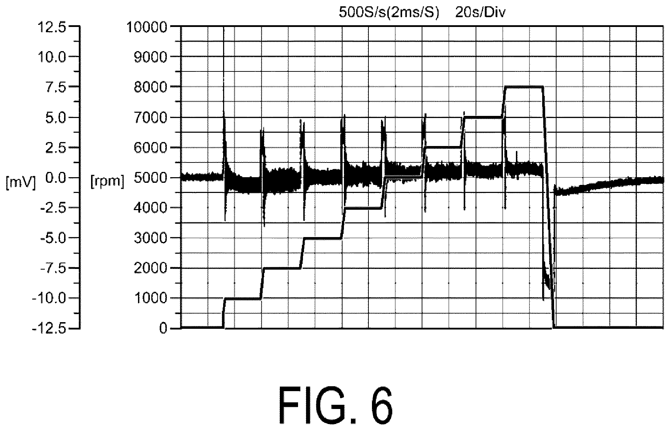

As illustrated in FIG. 6, a rotation test was performed on the plate with the weight being added, and it was confirmed that the torque output was constant even when the number of rotations was increased.

In the plate 10c of the third embodiment, both of the through hole 14 and the screw hole 15 are provided, but only the screw hole 15 may be provided without providing the through hole 14.

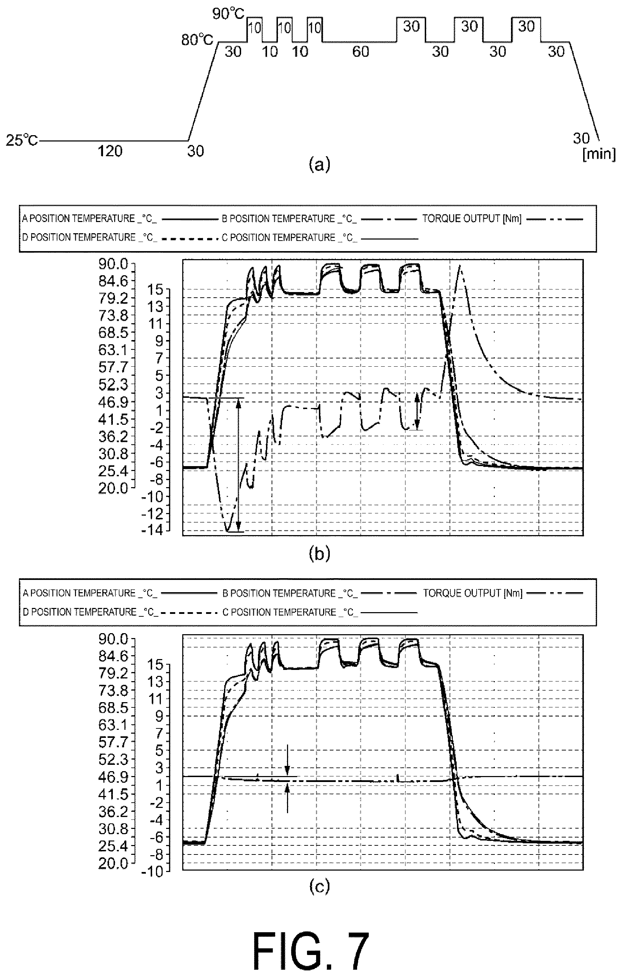

The temperature of the drive plate type torque converter of the present invention will be described with reference to FIG. 7.

In the drive plate type torque converter, the outer ring is connected to a low-temperature transmission, and the inner ring is connected to a high-temperature engine. Therefore, due to a temperature difference between the outer ring and the inner ring, a torque output may change (drift) during a temperature change (during temperature transition). This was examined assuming an actual vehicle test in a thermostatic chamber.

FIG. 7(a) illustrates a temperature change of the thermostatic chamber. The temperature was maintained at 25°C for 120 minutes, then increased to 80°C over 30 minutes, and maintained at 80°C for 30 minutes. Thereafter, a cycle of 90°C for 10 minutes and 80°C for 10 minutes was repeated. Thereafter, 30 minutes at 90°C and 30 minutes at 80°C were repeated. In the thermostatic chamber, the temperature of the inner ring changes after the temperature of the outer ring changes due to the inner ring coming into contact with the floor and the outer ring coming into contact with air.

FIG. 7(b) is a graph illustrating a temperature and a torque output in the case of using a strain gauge of a resistor made of copper-nickel, copper-nickel being a general material. The temperature was measured at positions A and D of the outer ring and positions B and C of the inner ring.

In FIG. 7(b), it can be seen that the torque output indicated by the two dot chain line changes in accordance with the temperature change. Since the drive plate type torque converter is at rest in the thermostatic chamber and no torque is applied, this output change is not a torque output but an abnormal value caused by thermoelectromotive force. Therefore, a material of the strain gauge not generating thermoelectromotive force was examined.

FIG. 7(c) is a graph illustrating the temperature and torque output when using a nickel-chromium resistor strain gauge.

In FIG. 7(c), it can be seen that the torque output indicated by the two dot chain line is substantially constant.

As described above, by changing the material of the resistor of the strain gauge from general copper-nickel to nickel-chromium, a change in the torque output can be avoided, so that the torque output can be detected with high accuracy.

Further, a material other than nickel-chromium may be used as long as the material does not generate thermoelectromotive force.

In both cases of FIGS. 7(b) and 7(c), a copper wire is used as the wiring.

The temperature change was studied in the plate 10c of the third embodiment with both the through hole 14 and the screw hole 15 being provided. However, in a plate with neither the through hole 14 nor the screw hole 15 being provided, the resistor of the strain gauge may be made of a material not generating thermoelectromotive force.

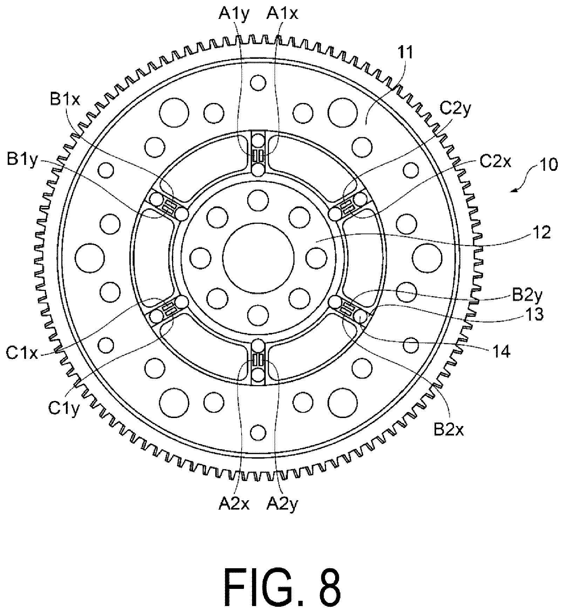

The bending load of the drive plate type torque converter of the present invention will be described with reference to FIG. 8.

When the strain gauge is deformed by the bending load, an apparent torque is output, but this is not an actual torque output, but an erroneous detection due to the bending load. Therefore, as illustrated in FIG. 8, strain gauges were disposed at the front and back sides of the six spokes 13, and a bending load was applied to the plate 10 to perform FEM analysis.

When a bending load is applied in the axial direction from A1 to A2 (the vertical direction in the figure), the output of the strain gauge at the position A1x and the output of the strain gauge at the position A2y opposed have the same absolute values but opposite signs, and cancel each other. Similarly, the outputs of A1y and A2x cancel each other, the outputs of B1x and C2y cancel each other, the outputs of B1y and C2x cancel each other, the outputs of C1x and B2y cancel each other, and the outputs of C1y and B2x cancel each other.

Note that the strain gauges on the front side of the six spokes 13 cancel the erroneous output due to the bending load, and similarly, the strain gauges on the back side of the six spokes 13 cancel the erroneous output due to the bending load.

In addition, although the output includes an error due to the bonding angle and position of the gauge, unevenness in processing, and the like, when the number of gauge elements increases (for example, 24 elements), each side of the bridge circuit has an average value of 1/4 the number of gauge elements (average of 6 elements), and thus it is possible to suppress the influence of the unevenness.

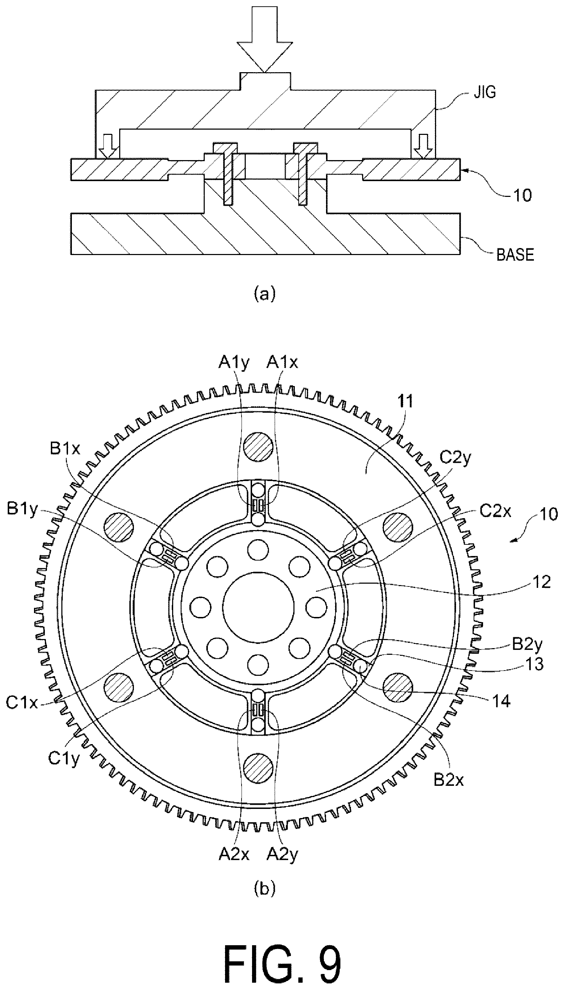

The thrust load of the drive plate type torque converter according to the present invention will be described with reference to FIG. 9.

When the strain gauge is deformed by the thrust load, an apparent torque is output, but this is not an actual torque output, but an erroneous detection due to the thrust load. Therefore, as in the case of FIG. 8, the strain gauges were disposed at the front and back sides of the six spokes 13, and a thrust load was applied to the plate 10 for actual measurement.

As illustrated in FIG. 9(a), the inner ring 12 of the plate 10 is fixed to a base, a jig is disposed on the plate 10, and a thrust load is applied from above the jig. As illustrated in FIG. 9(b), the plate 10 is in contact with the jig at six positions at the outer ring 11.

As indicated by the arrow in FIG. 9(a), when a thrust load is applied from above the jig, the output of the strain gauge at the position A1x and the output of the strain gauge at the position A1y cancel each other. That is, the two strain gauges on the front side of one spoke 13 cancel the erroneous output due to the thrust load, and the two strain gauges on the back side of one spoke 13 cancel the erroneous output due to the thrust load.

It was also confirmed that the amount of change in the torque output was very small.

As described above, in order to cancel the erroneous output due to the bending load and the thrust load, it is preferable that the strain gauges be disposed at the front and back sides of each spoke.

### Reference Signs List

10, 10a, 10b, 10c Plate,
11 Outer ring,
12 Inner ring,
13 Spoke,
13c Central portion,
13w Wall,
14 Through hole,
15 Screw hole,
20 Torque measuring device,
21 Power transmitting device,
22 Power transmitting coil,
23 Power receiving coil,
24 Rectifier,
25 Gauge,
26 Transmitter,
27 Receiving antenna,
28 Receiver,
100 Drive plate type torque converter,
W width of the spoke,
x, y strain gauges

## Claims

1. A drive plate type torque converter (100) comprising a plate (10) and a torque measuring device (20) for measuring a torque applied to the plate (10), wherein
the plate (10) includes an outer ring (11), an inner ring (12), and a plurality of spokes (13) configured to connect the outer ring (11) and the inner ring (12),
two strain gauges (x, y) of the torque measuring device are disposed at each of the spokes (13),
the spokes (13 )are provided with at least one through hole (14),
a width W of each of the spokes (13) is constant in a radial direction, **characterized in that** two through holes (14) are provided in each spoke (13), one at either side of each spoke (13) in a radial direction with the strain gauges (x, y) disposed in between.

2. The drive plate type torque converter (100) according to claim 1, wherein
walls (13w) are provided at both sides of each spoke (13) in a circumferential direction, and
a thickness of a central portion of the spoke having the strain gauges (x, y) disposed there within is less than a thickness of the walls (13w).

3. The drive plate type torque converter (100) according to any one of claims 1 or 2, wherein
two screw holes (15) per spoke (13) are provided on the outer ring (11) or inner ring (12) at equidistance positions in a circumferential direction to the respective spoke.

4. The drive plate type torque converter (100) according to any one of claims 1 to 3, wherein
a material of a resistor of the strain gauges (x, y) is nickel-chromium.

5. The drive plate type torque converter (100) according to any one of claims 1 to 4, wherein
two strain gauges (x, y) are disposed at a front side of each of the plurality of spokes and two strain gauges (x, y) are disposed at a back side of each of the plurality of spokes.

## Patentansprüche

1. Antriebsplatten-Drehmomentwandler (100), umfassend eine Platte (10) und eine Drehmomentmessvorrichtung (20) zum Messen eines auf die Platte (10) angewendeten Drehmoments, wobei
die Platte (10) einen äußeren Ring (11), einen inneren Ring (12) und eine Vielzahl von Speichen (13) beinhaltet, die dazu konfiguriert sind, den äußeren Ring (11) und den inneren Ring (12) zu verbinden,
zwei Dehnungsmessstreifen (x, y) der Drehmomentmessvorrichtung auf jeder der Speichen (13) angeordnet sind,
die Speichen (13) mit mindestens einem Durchloch (14) bereitgestellt sind,
eine Breite W jeder der Speichen (13) in einer radialen Richtung konstant ist, **gekennzeichnet dadurch, dass** zwei Durchlöcher (14) in jeder Speiche (13) bereitgestellt sind, eines auf jeder Seite jeder Speiche (13) in eine radiale Richtung mit den Dehnungsmessstreifen (x, y) dazwischen angeordnet.

2. Antriebsplatten-Drehmomentwandler (100) nach Anspruch 1, wobei
Wände (13w) auf beiden Seiten jeder Speiche (13) in einer Umfangsrichtung bereitgestellt sind, und
eine Dicke eines Mittelabschnitts der Speiche, der die dort angeordneten Dehnungsmessstreifen (x, y) aufweist, kleiner ist als eine Dicke der Wände (13w).

3. Antriebsplatten-Drehmomentwandler (100) nach einem der Ansprüche 1 oder 2, wobei
zwei Schraubenlöcher (15) pro Speiche (13) auf dem äußeren Ring (11) oder dem inneren Ring (12) in gleich beabstandeten Positionen in einer Umfangsrichtung zu der jeweiligen Speiche bereitgestellt sind.

4. Antriebsplatten-Drehmomentwandler (100) nach einem der Ansprüche 1 bis 3, wobei
ein Material eines Widerstands der Dehnungsmessstreifen (x, y) Nickel-Chrom ist.

5. Antriebsplatten-Drehmomentwandler (100) nach einem der Ansprüche 1 bis 4, wobei
zwei Dehnungsmessstreifen (x, y) auf einer Vorderseite jeder der Vielzahl von Speichen angeordnet sind und zwei Dehnungsmessstreifen (x, y) auf einer Rückseite jeder der Vielzahl von Speichen angeordnet sind.

## Revendications

1. Convertisseur de couple de type à plaque d'entraînement (100) comprenant une plaque (10) et un dispositif de mesure de couple (20) pour mesurer un couple appliqué à la plaque (10), dans lequel
la plaque (10) inclut un anneau extérieur (11), un anneau intérieur (12), et une pluralité de rayons (13) configurés pour connecter l'anneau extérieur (11) et l'anneau intérieur (12),
deux jauges de contrainte (x, y) du dispositif de mesure de couple sont disposées au niveau de chacun des rayons (13),
les rayons (13) sont fournis avec au moins un trou de passage (14),
une largeur W de chacun des rayons (13) est constante dans une direction radiale, **caractérisé en ce que** deux trous de passage (14) sont fournis dans chaque rayon (13), un de chaque côté de chaque rayon (13) dans une direction radiale avec les jauges de contrainte (x, y) disposées entre eux.

2. Convertisseur de couple de type à plaque d'entraînement (100) selon la revendication 1, dans lequel
des parois (13w) sont fournies au niveau des deux côtés de chaque rayon (13) dans une direction circonférentielle, et
une épaisseur d'une partie centrale du rayon présentant les jauges de contrainte (x, y) disposées à l'intérieur de celle-ci est inférieure à une épaisseur des parois (13w).

3. Convertisseur de couple de type à plaque d'entraînement (100) selon l'une quelconque des revendications 1 ou 2, dans lequel
deux trous de vis (15) par rayon (13) sont fournis sur l'anneau extérieur (11) ou l'anneau intérieur (12) à des positions équidistantes dans une direction circonférentielle par rapport au rayon respectif.

4. Convertisseur de couple de type à plaque d'entraînement (100) selon l'une quelconque des revendications 1 à 3, dans lequel
un matériau d'une résistance des jauges de contrainte (x, y) est du nickel-chrome.

5. Convertisseur de couple de type à plaque d'entraînement (100) selon l'une quelconque des revendications 1 à 4, dans lequel
deux jauges de contrainte (x, y) sont disposées au niveau d'un côté avant de chacun de la pluralité de rayons et deux jauges de contrainte (x, y) sont disposées au niveau d'un côté arrière de chacun de la pluralité de rayons.
